# EUROPEAN PATENT APPLICATION

(11) **EP 2 042 902 A1**
(43) Date of publication of application: **01.04.2009**
(21) Application number: 08163481.8
(22) Date of filing: 02.09.2008
(51) Int. Cl.: G02B 6/27, G02B 6/34, H04B 10/18

(54) **Polarization mode dispersion compensation using an arrayed waveguide grating**

(30) Priority: 26.09.2007 US 862116
(71) Applicant: Avanex Corporation, Fremont, CA 94538 (US)
(72) Inventor: Barbarossa, Giovanni, Saratoga, CA 95070 (US)
(74) Representative: Gauer, Pierre

(57) **Abstract**

One embodiment of the present invention sets forth a system for compensating for the detrimental effects of all-order polarization mode dispersion. The system includes a broadband polarization correction module cascaded with a broadband phase correction module. Each of the modules includes an AWG chip as a wavelength dispersing element, as opposed to a bulk optic grating. Thus, aligning the optical components used to separate light beams of different wavelengths within the system is simpler, and the size of the overall system is reduced. Further, the AWG chip may be more easily aligned with the other optical components within the system, with the alignment being more robust, both mechanically and thermally, relative to prior art systems that include bulk optics. Since AWG chips may be fabricated using well-known fabrication techniques, overall manufacturability is also improved and costs are reduced.

## Description

### BACKGROUND OF THE INVENTION

### Field of the Invention

Embodiments of the present invention generally relate to high-speed optical communications and, more specifically, to polarization mode dispersion compensation using an arrayed waveguide grating.

### Description of the Related Art

As optical communication systems become faster and transmit signals to farther distances, certain physics-related phenomena begin limiting performance. Polarization mode dispersion (PMD) is the main limiting factor in long-haul optical communication systems beyond 10 Gb/s. PMD refers to a phenomenon where two different polarizations of light in a waveguide, which should travel at the same speed, actually travel at different speeds due to asymmetries and imperfections in the core of the fiber. Unless properly compensated for, the phenomenon may cause random spreading of optical pulses, which may render the bit stream being transmitted inaccurate and may ultimately limit the rate at which data can be transmitted through the fiber.

The majority of research to date has focused on first-order and second-order PMD effects. However, as pulse durations continue to decrease and the bandwidth per channel continues to increase, first-order and second-order solutions to PMD issues have become inadequate. Consequently, an all-order broadband PMD compensation method has evolved that utilizes a two-stage compensation scheme. The scheme implements a broadband polarization correction setup in series with a broadband phase correction setup to independently equalize polarization spectra and phase spectra, respectively.

One problem with broadband all-order PMD compensation systems is that they typically are implemented in free-space optics configurations, specifically using a bulk grating as a wavelength dispersing element. Using free-space optics has several drawbacks. First, aligning free-space optics components, especially gratings, is tedious, time-consuming and oftentimes error-prone. Second, the resulting alignments of free-space optical components are typically unstable due to, among other things, the mechanical properties of the materials used to make gratings. Finally, manufacturing gratings in large volumes using standard industry equipment is difficult, making free-space configurations expensive.

As the foregoing illustrates, what is needed in the art is an all-order PMD compensation system that addresses one or more of the problems set forth above.

### SUMMARY OF THE INVENTION

One embodiment of the present invention sets forth a polarization mode dispersion compensation system. The system comprises a polarization correction module configured to produce a polarization-corrected signal that includes a first circulator configured to receive an optical input signal comprised of multiple wavelengths and route the optical input signal to one or more optical components, a first arrayed waveguide grating chip configured to receive the optical input signal from the first circulator and separate the optical input signal into a plurality of light beams, each light beam having a different wavelength, and a first lens configured to collimate light beams received from the first arrayed waveguide chip.

One advantage of the disclosed system is that the polarization correction module includes an AWG chip as a wavelength dispersing element, as opposed to a bulk optic grating. Thus, aligning the optical components used to separate light beams of different wavelengths within the system is simpler, and the size of the overall system is reduced. Further, the AWG chip may be more easily aligned with the other optical components within the system, with the alignment being more robust, both mechanically and thermally, relative to prior art systems that include bulk optics.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.

Figure 1 is a conceptual diagram of an all-order PMD compensation system, according to prior art;

Figure 2 is a conceptual diagram of an all-order PMD compensation system, according to one embodiment of the invention; and

Figure 3 is a conceptual diagram of the AWG chip of Figure 2, according to one embodiment of the invention.

### DETAILED DESCRIPTION

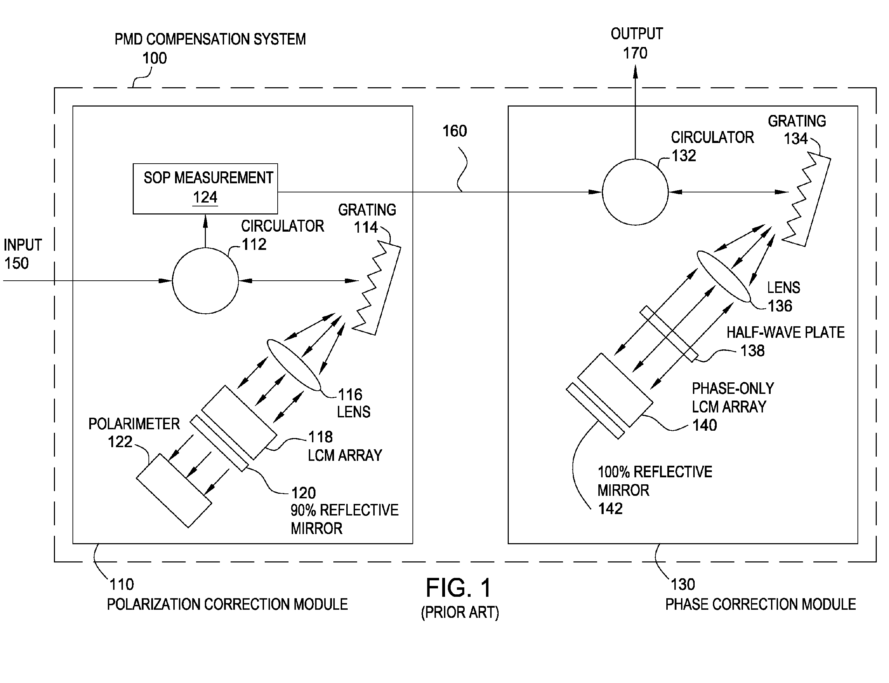

Figure 1 is a conceptual diagram of an all-order PMD compensation system 100, according to prior art. As shown, the PMD compensation system 100 includes, without limitation, a polarization correction module 110 connected to a phase correction module 130 to create a two-stage PMD compensation scheme. In the first stage, the polarization correction module 110 receives an input signal 150 consisting of multiple wavelengths having different states of polarization (SOP) and different phases and produces a polarization-corrected signal 160. In the second stage, the phase correction module 130 receives the polarization-corrected signal 160 and produces a polarization- and phase-corrected output signal 170.

The polarization correction module 110 includes, without limitation, a circulator 112, a grating 114, a lens 116, a liquid crystal modulator (LCM) array 118, a 90% reflective mirror 120, a polarimeter 122 and an SOP measurement system 124. The input signal 150 is first received by the circulator 112, which is configured to receive multiple input signals and route them in different directions. This functionality is used to route the uncompensated input signal 150 towards the grating 114 and the polarization-corrected signal 160 towards the phase-correction module 130. Upon receiving the input signal 150, the grating 114 acts as a wavelength-dispersing element, spatially separating the input signal 150 into beams of different individual wavelengths as a result of diffraction. The beams of different individual wavelengths are collimated by the lens 116 and received by the LCM array 118, which corrects the wavelength-dependent polarization state of each beam to a fixed wavelength-independent polarization state by rotating the polarization states of the beams in a wavelength-by-wavelength fashion. Next, the 90% reflective mirror 120 allows 10% of the polarization-corrected light to reach the polarimeter 122, which measures and records the polarization rotations of the different beams of light passed through the LCM array 118. The other 90% of the polarization-corrected light is reflected back to the lens 116, which focuses the beams of different individual wavelengths onto the grating 114, which then multiplexes the individual beams into one signal consisting of multiple wavelengths. This signal is received by the circulator 112 and is transmitted as the polarization-corrected signal 160, through the SOP measurement system 124, to the phase correction module 130.

The phase correction module 130 includes, without limitation, a circulator 132, a grating 134, a lens 136, a half-wave plate 138, a phase-only LCM array 140 and a 100% reflective mirror 142. The polarization-corrected signal 160, which again consists of multiple wavelengths with different phases, is received by the circulator 132 and passed to the grating 134, which, again acts as a wavelength-dispersing element by spatially separating the polarization-corrected signal 160 into beams of different individual wavelengths. The beams of different individual wavelengths are collimated by the lens 136 and are incident on the half-wave plate 138, which rotates the fixed horizontal polarization of each beam transmitted from the grating 134 to a fixed vertical polarization, as required by the phase-only LCM array 140. The phase-only LCM array 140 corrects the wavelength-dependent phase of each beam received from the half-wave plate 138 to a fixed phase in a wavelength-by-wavelength fashion. Next, the 100% reflective mirror 142 reflects all of the phase-corrected light back to the lens 136, which focuses the beams of different individual wavelengths back onto the grating 134, which multiplexes the individual beams into one signal consisting of multiple wavelengths. Finally, the one signal of multiple wavelengths is received by the circulator 134, which produces the polarization- and phase-corrected output signal 170.

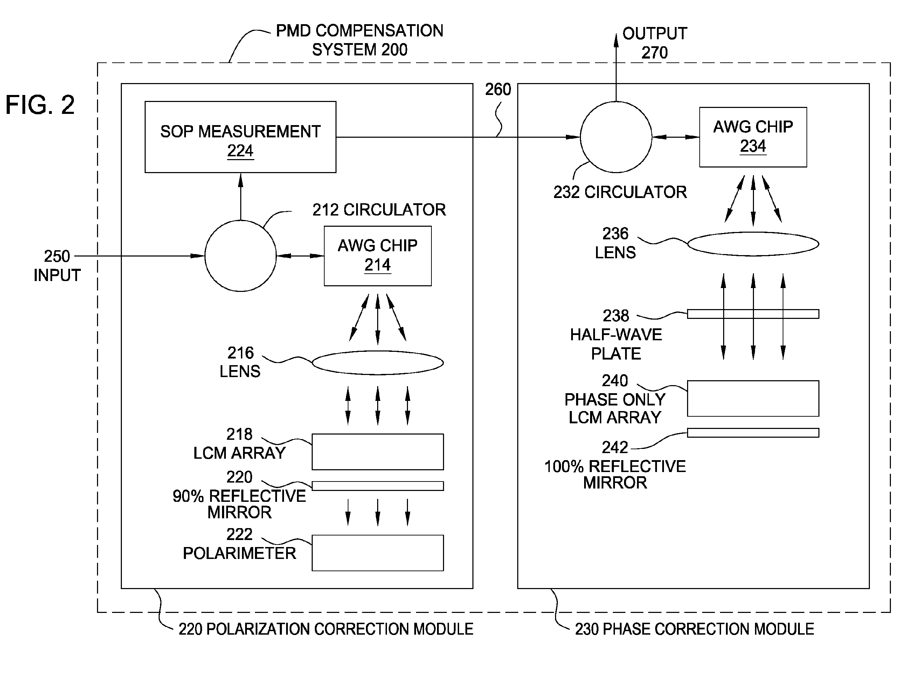

Figure 2 is a conceptual diagram of an all-order PMD compensation system 200, according to one embodiment of the invention. As shown, the PMD compensation system 200 includes, without limitation, a polarization correction module 210 connected to a phase correction module 230 to create a two-stage PMD compensation scheme. In the first stage, the polarization correction module 210 receives an input signal 250 consisting of multiple wavelengths having different SOP and different phases and produces a polarization-corrected signal 260. In the second stage, the phase correction module 230 receives the polarization-corrected signal 260 and produces a polarization- and phase-corrected output signal 270.

The polarization correction module 210 includes, without limitation, a circulator 212, an arrayed waveguide grating (AWG) chip 214, a lens 216, an LCM array 218, a 90% reflective mirror 220, a polarimeter 222 and an SOP measurement system 224. The input signal 250 is first received by the circulator 212, which is configured to receive multiple input signals and route them in different directions, similar to the circulator 112 of Figure 1. This functionality is used to route the uncompensated input signal 250 towards the AWG chip 214 and the polarization-corrected signal 260 towards the phase-correction module 230. Upon receiving the input signal 250, the AWG chip 214 acts as a wavelength-dispersing element, spatially separating the input signal 250 into beams of different individual wavelengths as a result of each of the wavelengths undergoing a different phase shift while traveling through the AWG chip 214. The beams of different individual wavelengths are collimated by the lens 216 and received by the LCM array 218, which corrects the wavelength-dependent polarization state of each beam to a fixed wavelength-independent polarization state (for example, to a fixed horizontal polarization state) by rotating the polarization states of the different beams in a wavelength-by-wavelength fashion. Next, the 90% reflective mirror 220 allows 10% of the polarization-corrected light to reach the polarimeter 222, which measures and records the polarization rotations of the different beams of light passed through the LCM array 218. The other 90% of the polarization-corrected light is reflected back to the lens 216, which focuses the beams of individual wavelengths onto the AWG chip 214, which then multiplexes the individual beams into one signal consisting of multiple wavelengths. This signal is received by the circulator 212 and is transmitted as the polarization-corrected signal 260, through the SOP measurement system 224 (where the polarization of the signal 260 can be measured), to the phase correction module 230.

The phase correction module 230 includes, without limitation, a circulator 232, an AWG chip 234, a lens 236, a half-wave plate 238, a phase-only LCM array 240 and a 100% reflective mirror 242. The polarization-corrected signal 260, which again consists of multiple wavelengths with different phases, is received by the circulator 232 and passed to the AWG chip 234, which, again acts as a wavelength-dispersing element by spatially separating the polarization-corrected signal 260 into beams of different wavelengths. The beams of different individual wavelengths are collimated by the lens 236 and are incident on the half-wave plate 238, which rotates the fixed polarization of each beam transmitted from the AWG chip 234 by ninety degrees (for example, a fixed horizontal polarization is rotated to a fixed vertical polarization), as required by the phase-only LCM array 240. The phase-only LCM array 240 corrects the wavelength-dependent phase of each beam received from the half-wave plate 238 to a fixed phase in a wavelength-by-wavelength fashion. Next, the 100% reflective mirror 242 reflects all of the phase-corrected light back to the lens 236, which focuses the beams of individual wavelengths back onto the AWG chip 234, which multiplexes the individual beams into one signal consisting of multiple wavelengths. Finally, the one signal of multiple wavelengths is received by the circulator 234, which produces the polarization- and phase-corrected output signal 270.

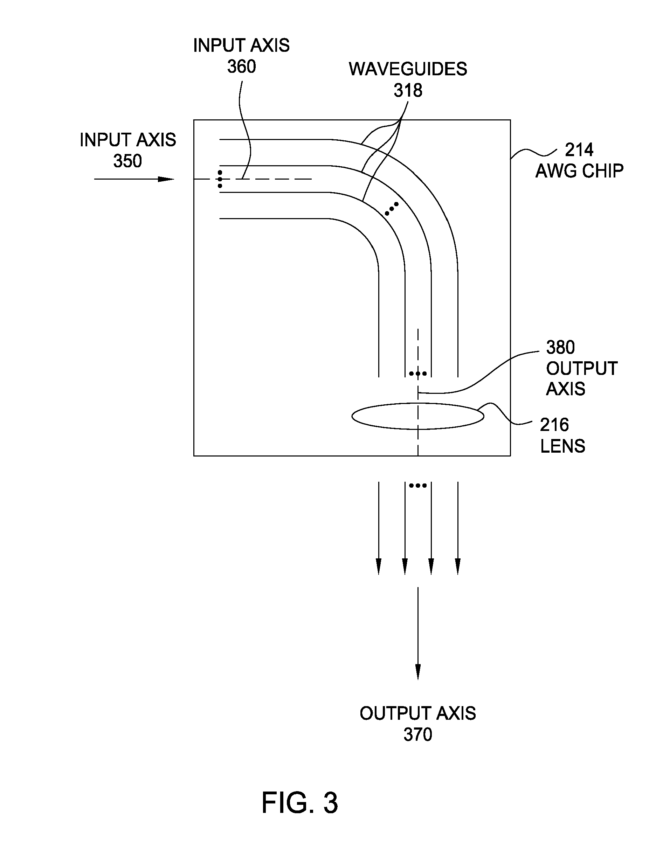

There are several differences between using a grating and an AWG chip in a PMD compensation system. The first difference relates to the physical phenomena used to separate the beams of different individual wavelengths. Since the grating relies on a phenomenon of diffraction, the overall system requires the presence of extended free space and additional components to collimate the light beams dispersed while traveling through that space. On the other hand, the functionality of the AWG chip is not based on diffraction. Rather, the beams of different individual wavelengths undergo different phase shifts as they travel through an array of waveguides of different lengths within the AWG chip, thereby separating the beams according to the individual wavelengths. Since the latter is not a free-space phenomenon, the AWG chip does not require the presence of extended free space in the overall system or any additional collimating components. Importantly, as described in greater detail below in Figure 3, aligning the optical components in the overall system is far easier compared to the complicated alignment issues that exist in a system using bulk optics because the arrayed waveguides are already aligned within the AWG chip. The only alignment necessary is between the input and output of the AWG chip, which substantially simplifies the assembly of the overall system.

The second difference between using an AWG chip and a grating is that the AWG chip may be implemented on silicon, which improves the mechanical and thermal stability of the final alignment within the overall system relative to a system using bulk optics because the mechanical and thermal properties of silicon are superior to the mechanical and thermal properties of the materials used to make gratings. In addition, AWG chips may be reproduced in volume using a mask, which enables the alignment of the optical components (e.g., the arrayed waveguides) within each AWG chip to be repeated consistently from chip to chip. The AWG chips are not only easier to manufacture than gratings, but the repeatability of the fabrication process reduces variations in the optical alignments between the different components in a PMD compensation system from system to system. Finally, an AWG chip requires much less space than a grating in the overall system since the AWG chip is small and thinner than the grating and, again, the AWG chip does not need any extended free space in the system for diffraction.

Figure 3 is a conceptual diagram of the AWG chip 214 or 234 of Figure 2, according to one embodiment of the invention. As shown, the AWG chip 214 or 234 includes multiple arrayed waveguides 318. On one side of the AWG chip 214 or 234, the waveguides 318 are aligned with an input axis 350 of an external system, such as the circulators 212, 232 of Figure 2, and, on the other side, the waveguides 318 are aligned with an output axis 370 of an external system, such as the lenses 216, 236 of Figure 2. Importantly, and as previously described herein, each of the waveguides 318 has a different length. Thus, as an input signal of multiple wavelengths enters the AWG chip 214 or 234 along the input axis 350 and travels through the waveguides 318, beams of different individual wavelengths undergo different phase shifts. As a result of this phenomenon, a beam of only one wavelength is output from each of the waveguides 318. The number of arrayed waveguides 318 on the AWG chip 214 or 234 may be modified to ensure that a beam of each wavelength included in the input signal is able to travel through an individual channel. An accurate and precise alignment between an input signal of multiple wavelengths and multiple output signals, each consisting of a spatially separated beam of a different individual wavelength can be easily achieved by aligning the input axis 360 and the output axis 380 of the AWG chip 214 or 234 with the input axis 350 and the output axis 370, respectively, of the external systems.

In an alternative embodiment, the lens 216 or 236 may be included within the AWG chip 214 or 234, respectively, as also shown on Figure 3, to collimate the beams of individual wavelengths exiting the waveguides 318.

While the foregoing is directed to embodiments of the present invention, other and further embodiments of the invention may be devised without departing from the basic scope thereof, and the scope thereof is determined by the claims that follow.

## Claims

1. A polarization mode dispersion compensation system, comprising:
a polarization correction module configured to produce a polarization-corrected signal that includes:
a first circulator configured to receive an optical input signal comprised of multiple wavelengths and route the optical input signal to one or more optical components;
a first arrayed waveguide grating chip configured to receive the optical input signal from the first circulator and separate the optical input signal into a plurality of light beams, each light beam having a different wavelength; and
a first lens configured to collimate light beams received from the first arrayed waveguide chip.

2. The system of claim 1, wherein each light beam has a wavelength-dependent polarization state, and the polarization correction module further includes a liquid crystal modulator array configured to receive the light beams from the first lens and to rotate each light beam to generate a wavelength-independent polarization state for each light beam.

3. The system of claim 2, wherein the polarization correction module further includes a first reflective mirror configured such that a first portion of each light beam transmitted from the liquid crystal modulator array passes through the first reflective mirror and a second portion of each light beam is reflected back to the first lens.

4. The system of claim 3, wherein the first reflective mirror reflects 90% of each light beam and allows 10% of each light beam to pass through.

5. The system of claim 3, wherein the reflected light beams are transmitted through the first lens back to the first arrayed waveguide grating chip.

6. The system of claim 5, wherein the first arrayed waveguide grating chip is configured to multiplex the reflected light beams to produce a polarization-corrected optical signal comprised of the multiple wavelengths.

7. The system of claim 6, wherein first arrayed waveguide grating chip is configured to transmit the polarization-corrected optical signal back to the first circulator.

8. The system of claim 7, wherein the polarization correction module further includes a state of polarization measurement system configured to receive the polarization-corrected optical signal from the first circulator and to measure the state of polarization of the polarization-corrected optical signal.

9. The system of claim 1, wherein the first arrayed waveguide grating chip includes the first lens.

10. The system of claim 1, further comprising a phase correction module that includes:
a second circulator configured to receive the polarization-corrected optical signal from the polarization correction module and route the polarization-corrected optical signal to one or more optical components;
a second arrayed waveguide grating chip configured to receive the polarization-corrected optical signal from the second circulator and separate the polarization-corrected optical signal into the plurality of light beams, each light beam having a different wavelength; and
a second lens configured to collimate light beams received from the second arrayed waveguide chip.

11. The system of claim 10, wherein the phase correction module further includes a half-way plate configured to receive the light beams from the second lens and to rotate the polarization of each light beam by ninety degrees.

12. The system of claim 11, wherein each rotated light beam has a wavelength-dependent phase, and the phase correction module further includes a phase-only liquid crystal modulator array configured to receive the rotated light beams from the half-way plate and to correct the phase of each light beam to generate a fixed phase for each light beam.

13. The system of claim 12, wherein the phase correction module further includes a reflective mirror configured to reflect each light beam transmitted from the phase-only liquid crystal modulator back to the second lens.

14. The system of claim 13, wherein the reflected light beams are transmitted through the second lens back to the second waveguide grating chip.

15. The system of claim 14, wherein the second arrayed waveguide grating chip is configured to multiplex the reflected light beams to produce a polarization- and phase-corrected optical signal comprised of the multiple wavelengths.
